(19) Europäisches Patentamt
European Patent Office
Office européen des brevets

(11) Veröffentlichungsnummer: **0 020 925**
**A1**

(12) # EUROPÄISCHE PATENTANMELDUNG

(21) Anmeldenummer: **80102211.2**

(22) Anmeldetag: **24.04.80**

(51) Int. Cl.³: **C 08 C 19/10**

(30) Priorität: **19.06.79 DE 2924577**

(43) Veröffentlichungstag der Anmeldung: **07.01.81**
**Patentblatt 81/1**

(84) Benannte Vertragsstaaten: **AT BE FR GB IT SE**

(71) Anmelder: **CHEMISCHE WERKE HÜLS AG,**
**Postfach 1320, D-4370 Marl 1 (DE)**

(72) Erfinder: **Kampf, Wolfgang, Dr., Im Wienäckern 60 b,**
**D-4358 Haltern (DE)**

(54) **Verfahren zur Isomerisierung von isolierten zu konjugierten Doppelbindungen in Homo- und/oder Copolymeren von 1,3-Dienen.**

(57) Als Isomerisierungskatalysator verwendet man entweder ein Alkalihydrid und Ammoniak, ein primäres oder sekundäres Amin, oder eine alkalimetallorganische Verbindung oder fein verteiltes Alkalimetall und Ammoniak, ein primäres oder sekundäres Monoamin, ein Amin der allgemeinen Formel I:

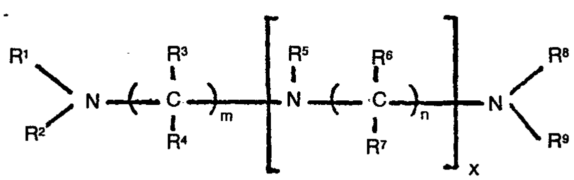

in der die Reste $R^1$ bis $R^9$ ein Wasserstoffatom oder einen Alkylrest, m 3 bis 6 und n und x 1 bis 6 sein können, oder ein Amin der allgemeinen Formel II:

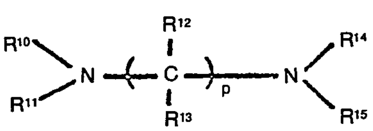

, in der die Reste $R^{10}$ bis $R^{15}$ ein Wasserstoffatom oder ein Alkylrest sein können und p eine Zahl grösser 3 ist, oder eine magnesiumorganische Verbindung und ein Amin der allgemeinen Formeln I und II, in denen die Reste $R^1$ bis $R^{15}$ ein Wasserstoffatom oder ein Alkylrest, m und p 2 bis 6 und n und x 1 bis 6 sein können.

EP 0 020 925 A1

Verfahren zur Isomerisierung von isolierten zu konjugierten Doppelbindungen in Homo- und/oder Copolymeren von 1,3-Dienen

Bei der Homopolymerisation von 1,3-Dienen sowie bei deren Copolymerisation untereinander oder mit vinylsubstituierten Aromaten erhält man Polymere mit isolierten Doppelbindungen.

Es ist jedoch bekannt, daß nieder- und hochmolekulare Verbindungen mit konjugierten Doppelbindungen den entsprechenden Verbindungen mit isolierten Doppelbindungen an Reaktivität und damit auch an Attraktivität überlegen sind. Aus diesem Grunde wurden bereits Verfahren zur Herstellung von Verbindungen mit konjugierten Doppelbindungen entwickelt. Man kann dabei z. B. so vorgehen, daß man 1,3-Diene mit Acetylen copolymerisiert [J. Furukawa et al., Journ. Polym. Sci., Polym. Chem. Ed., Vol. 14, 1213-19 (1976)]. Eine andere und wirtschaftlichere Möglichkeit ist die Isomerisierung von isolierten zu konjugierten Doppelbindungen. Zur Durchführung dieser Isomerisierung wurden die unterschiedlichsten Katalysatorsysteme eingesetzt.

So ist aus der DE-AS 11 74 071 ein Verfahren zur Isomerisierung von Butadienpolymerisaten bekannt, bei dem man die Butadienpolymerisate in Gegenwart geringer Mengen von Übergangsmetallen der VI. bis VIII. Gruppe des Periodischen Systems der Elemente und bzw. oder von Verbindungen,

in denen diese Metalle im nullwertigen Zustand vorliegen, auf Temperaturen zwischen 100 und 300 °C erhitzt.

Die Nachteile dieses Verfahrens bestehen darin, daß einmal die Isomerisierungstemperatur sehr hoch ist und dabei Gelierung eintreten kann; zum anderen findet mit den relativ teuren Katalysatoren cis-trans-Isomerisierung statt, die zum Verlust an reaktiven cis-1,4-Strukturen führt.

Weiterhin ist gemäß dem Verfahren der DE-OS 23 42 885 die Kombination aus einer organischen Alkalimetallverbindung und einem speziellen Diamin als Isomerisierungskatalysator für niedermolekulare Homo- und Copolymere des Butadiens einsetzbar. Der chelatisierende Effekt der eingesetzten Diamine bedingt jedoch einen relativ hohen Gehalt an Alkalimetallionen im Polymeren, der sich beispielsweise bei dessen Einsatz im Lacksektor negativ auswirkt. Außerdem ergibt die als bevorzugt beschriebene Kombination von Polymerisation und Isomerisierung nicht den für die Trocknungseigenschaften von niedermolekularen Polybutadienen vorteilhaften hohen Gehalt an cis-1,4-Strukturen.

Aufgabe der Erfindung war es, ein Verfahren zur Isomerisierung von isolierten zu konjugierten Doppelbindungen in Homo- und/oder Copolymeren von 1,3-Dienen zu entwickeln, bei dem im allgemeinen unter Erhalt anwendungstechnisch wertvoller cis-1,4-Strukturen keine Gelierung auftritt, und das Produkte mit niedrigem Gehalt an Alkalimetallionen ergibt.

Diese Aufgabe wurde nun durch die im Patentanspruch beschriebenen Maßnahmen gelöst.

Die Brauchbarkeit primärer und sekundärer Monoamine sowie spezieller Polyamine, die 2 bis 4 Methylen-Gruppen zwischen mehr als zwei Stickstoffatomen enthalten, war im Hinblick auf den Offenbarungsgehalt der DE-OS 23 42 885, vornehmlich Seite 18, Absatz 1, nicht zu erwarten.

Unter Homo- und Copolymeren von 1,3-Dienen werden im Rahmen dieser Erfindung verstanden: Homopolymerisate von z. B. Butadien-(1,3), Isopren, 2,3-Dimethylbutadien und Piperylen, Copolymerisate dieser 1,3-Diene untereinander sowie Copolymerisate dieser 1,3-Diene mit vinylsubstituierten aromatischen Verbindungen, wie z. B. Styrol, α-Methylstyrol, Vinyltoluol und Divinylbenzol. Der Gehalt an vinylsubstituierten aromatischen Verbindungen in den Copolymerisaten soll 50 Molprozent nicht überschreiten. Bevorzugt werden bei dem erfindungsgemäßen Verfahren Polybutadiene mit Molekulargewichten ($\bar{M}n$) von 500 bis 20 000, besonders 600 bis 10 000 und ganz besonders 800 bis 6 000, eingesetzt. Die Mikrostruktur der Diene in den Homo- bzw. Copolymeren ist im allgemeinen nicht kritisch, jedoch ist es vorteilhaft, wenn mindestens 20 % der Doppelbindungen cis-1,4-Struktur besitzen.

Als Isomerisierungskatalysatoren können bei dem erfindungsgemäßen Verfahren die im Patentanspruch unter 1, 2 und 3 beschriebenen Systeme bzw. Verbindungen eingesetzt werden.

Darunter fallen zunächst (1) die Umsetzungsprodukte (Amide) von Alkalihydriden, wie Lithium-, Natrium- und Kaliumhydrid, mit Ammoniak oder primären oder sekundären Aminen. Geeignete Amine sind (cyclo)-aliphatische und aromatische Mono- und Polyamine mit 1 bis 20 Kohlenstoffatomen. Bevorzugt sind aliphatische Polyamine mit 3 oder 4 Stickstoffatomen, wie z. B. Dipropylentriamin und Bis-(3-aminopropyl)-ethylendiamin.

Neben den Amiden kann man auch die einzelnen Komponenten (1.1 plus 1.2) als Gemisch einsetzen. Dabei beträgt das molare Mischungsverhältnis von 1.1 zu 1.2 im allgemeinen 5 : 1 bis 1 : 20, vorzugsweise 2 : 1 bis 1 : 10. Ein Überschuß von Amin ist nicht nur beim Einsatz eines Gemisches der Katalysatorkomponenten von Vorteilen, sondern auch

beim Einsatz der Umsetzungsprodukte (Amide), vor allem bei niedrigen Katalysatorkonzentrationen, wie z. B. 0,03 Grammatom Alkali pro Mol zu isomerisierendes Polymer.

Weitere einsetzbare Isomerisierungskatalysatoren (2) sind wiederum zunächst die Umsetzungsprodukte von alkalimetallorganischen Verbindungen der Formel Me-R, worin Me gleich Lithium, Natrium oder Kalium sein kann und R für eine Alkylgruppe, wie z. B. Methyl, Ethyl, Propyl, Butyl und Pentyl, eine Alkenylgruppe, wie z. B. Allyl und Methallyl, eine Cycloalkylgruppe, wie z. B. Cyclopentyl und Cyclohexyl, oder eine Aryl- oder Aralkylgruppe, wie z. B. Phenyl und Benzyl, mit vorzugsweise 1 bis 20 Kohlenstoffatomen, steht, oder von feinverteilten Alkalimetallen, wie Lithium, Natrium und Kalium, mit Ammoniak, einem primären oder sekundären Monoamin mit 1 bis 20, vorzugsweise 1 bis 6 Kohlenstoffatomen, einem Amin der allgemeinen Formel I:

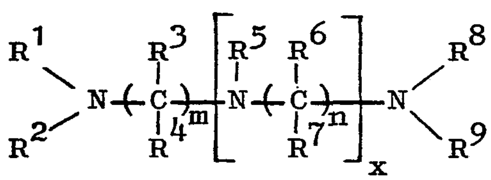

, in der die Reste $R^1$ bis $R^9$ ein Wasserstoffatom und/oder einen Alkylrest mit 1 bis 6 Kohlenstoffatomen sein können, wobei mindestens einer der Reste $R^1$, $R^2$, $R^5$, $R^8$ und $R^9$ ein Wasserstoffatom sein muß, m 3 bis 6 und n und x 1 bis 6 sein können, oder mit einem Amin der allgemeinen Formel II:

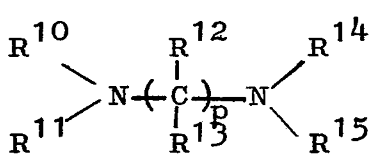

, in der die Reste $R^{10}$ bis $R^{15}$ ein Wasserstoffatom und/oder einen Alkylrest mit 1 bis 6 Kohlenstoffatomen sein können, wobei mindestens einer der Reste $R^{10}$, $R^{11}$, $R^{14}$ und $R^{15}$ Wasserstoff sein muß, und p eine Zahl größer 3, vorzugsweise 4 bis 6, ist, umsetzt.

Bevorzugte alkalimetallorganische Verbindungen sind Lithiumbutyl und Natriumamyl; bevorzugte Amine Dipropylentriamin und Bis-(3-aminopropyl)-ethylendiamin.

Neben den Amiden kann man wiederum die einzelnen Komponenten (2.1 plus 2.2, 2.3 oder 2.4) als Gemisch einsetzen. Dabei beträgt das molare Mischungsverhältnis von 2.1 zu 2.2, 2.3 bzw. 2.4 im allgemeinen 5 : 1 bis 1 : 20, vorzugsweise 2 : 1 bis 1 : 10. Ein Überschuß von Amin ist nicht nur beim Einsatz eines Gemisches der Katalysatorkomponenten von Vorteilen, sondern auch beim Einsatz der Umsetzungsprodukte (Amide), vor allem bei niedrigen Katalysatorkonzentrationen, wie z. B. 0,03 Grammatom Alkali pro Mol zu isomerisierendes Polymer.

Schließlich können bei dem vorliegenden Verfahren die Umsetzungsprodukte oder Gemische (3) aus einer magnesiumorganischen Verbindung der allgemeinen Formel $R'_y$ -Mg-$X_z$, mit $R'$ gleich Alkyl ($C_1$bis $C_8$), X gleich Chlor oder Brom, y gleich 0,5 bis 2,0 und z gleich 2-y, und einem Amin der allgemeinen Formeln I und II, in denen die Reste $R^1$ bis $R^{15}$ ein Wasserstoffatom und/oder ein Alkylrest mit 1 bis 6 Kohlenstoffatomen, m und p 2 bis 6 und n und x 1 bis 6 sein können, eingesetzt werden.

Auch in diesem Falle können statt der Umsetzungsprodukte die einzelnen Komponenten (3.1 plus 3.2) im Gemisch eingesetzt werden. Dabei beträgt das molare Mischungsverhältnis (3.1 zu 3.2) im allgemeinen 5 : 1 bis 1 : 20, vorzugsweise 2 : 1 bis 1 : 10. Ein Überschuß von Amin ist nicht nur beim Einsatz eines Gemisches der Katalysatorkomponenten von Vorteilen, sondern auch beim Einsatz der Umsetzungsprodukte, vor allem bei niedrigen Katalysatorkonzentrationen, wie z. B. 0,03 Grammatom Alkali pro Mol zu isomerisierendes Polymer.

Ein typisches Katalysatorsystem der letztgenannten Art besteht beispielsweise aus Ethylmagnesiumbromid und Bis-(3-aminopropyl)-ethylendiamin.

Die verschiedenen beim erfindungsgemäßen Verfahren einsetzbaren Katalysatoren bzw. Katalysatorsysteme werden im allgemeinen dem zu isomerisierenden Polymer in einer solchen Menge zugesetzt, daß pro 100 g Polymer 0,5 bis 100 mGrammatom, vorzugsweise 1 bis 40 mGrammatom, Alkalimetall bzw. Magnesium vorhanden sind.

Das zu isomerisierende Polymere kann sowohl mit als auch ohne Lösemittel eingesetzt werden. Der Einsatz eines Lösemittels ist dann angebracht bzw. erforderlich, wenn die Viskosität des Polymeren so hoch ist, daß die homogene Verteilung der Katalysatorkomponenten nicht gewährleistet ist.

Als Lösemittel, die frei von störenden Verunreinigungen, wie z. B. Sauerstoff und Wasser, sein sollen, kommen z. B. aliphatische, cycloaliphatische und aromatische Kohlenwasserstoffe infrage. Typische Vertreter aus diesen Gruppen sind Hexan, Octan, Cyclohexan, Benzol und Toluol.

Das erfindungsgemäße Verfahren wird im allgemeinen bei Temperaturen von 0 bis +200 °C durchgeführt. Bevorzugt ist der Bereich von +20 bis +100 °C.

Bei der Durchführung des erfindungsgemäßen Verfahrens geht man im allgemeinen so vor, daß man das zu isomerisierende Polymer, gegebenenfalls gelöst in einem Lösemittel, nach Zusatz des Katalysators bzw. der Katalysatorkomponenten gegebenenfalls unter Rühren auf die gewünschte Temperatur bringt. Ist der Katalysator schlecht löslich, wie z. B. im Falle der Alkaliamide, so wird das gegebenenfalls in einem Lösemittel gelöste Polymere mit einem Lösungsvermittler, wie beispielsweise Hexamethylphosphorsäuretriamid, versetzt. Die erforderliche Reaktionszeit richtet sich nach Art und Menge des Katalysators bzw. der Katalysatorkomponenten, nach dem zu isomerisierenden Polymeren und nach der Temperatur. Die optimale Reaktionszeit läßt sich durch einige orientierende Versuche leicht ermitteln. Die Reaktion wird durch Zugabe einer H-aciden Verbindung, wie z. B. Methanol oder Isopropanol, beendet. Bis zu diesem Verfahrensschritt werden natürlich alle Operationen unter Schutzgasatmosphäre, vorzugsweise unter Argon, durchgeführt. Anschließend wird der Katalysator durch wäßrige Wäsche und/oder eine adsorptive Behandlung, z. B. mit Bleicherde, weitestgehend entfernt.

Die nach dem erfindungsgemäßen Verfahren isomerisierten Homo- und/oder Copolymeren von 1,3-Dienen, die bevorzugt zur Herstellung von Überzugsmitteln Verwendung finden, haben bis zu 35 %, bezogen auf die Gesamtzahl der Doppelbindungen, konjugierte Dienstrukturen. Daneben treten auch in geringem Maße konjugierte Tri- und Tetraen-Strukturen auf.

Das erfindungsgemäße Verfahren wird durch die nachfolgenden Beispiele näher erläutert.

Die darin angegebenen Konjuengehalte wurden UV-spektroskopisch ermittelt und sind im Falle der Polybutadiene als Gewichtsprozente, berechnet für $C_8H_{14}$ (konjugierte Diene), $C_8H_{12}$ (konjugierte Triene) und $C_8H_{10}$ (konjugierte Tetraene), angegeben. Raumtemperatur bedeutet in allen Beispielen 25 °C. Das Verhältnis Metall/Kette stellt jeweils das Molverhältnis von Metall zum Polymeren dar.

Beispiel 1

100 g eines Polybutadienöls ($\overline{M}n$ 1 500; 76 % cis-1,4-, 1 % 1,2-, 23 % trans-1,4-Doppelbindungen) wurden in einem ausgeheizten und mit Argon gespülten Rührkolben mit 4,9 ml Dipropylentriamin bei Raumtemperatur versetzt. Dabei trübte sich das Polybutadienöl. Mit einer Pipette wurden 3,4 ml einer 2 m LiBu-Lösung in Hexan zugegeben. Damit waren 0,1 Li/Kette und ein Amin/Li-Verhältnis von 5 : 1 eingestellt, d. h. außer dem sich bildenden Li-Amid war überschüssiges Amin vorhanden. Die Orangefärbung der Lösung schlug beim Aufheizen auf 80 °C in gelbbraun um. Mit zunehmender Zeit wurde das Reaktionsprodukt dunkler. Nach 30 Minuten, 60 Minuten und 180 Minuten wurden jeweils Proben entnommen und mit Methanol versetzt. Sie wurden im Ölpumpenvakuum bei 140 °C 1 Stunde von flüchtigen Bestandteilen wie Methanol befreit. Alle Operationen, auch die der folgenden Beispiele, wurden unter Schutzgasatmosphäre (Argon) durchgeführt. Die zeitliche Entwicklung von Konjuengehalt und Mikrostruktur enthält Tabelle 1.

Tabelle 1

Zeitabhängigkeit der Isomerisierung mit LiBu/Dipropylentriamin (DPTA)

| t | Mikrostruktur (%) | | | Konjuengehalt (%) | | | JZ |
|---|---|---|---|---|---|---|---|
| (Min) | trans-1,4 | 1,2 | cis-1,4 | Diolef. | Triolef. | Tetraolef. | |
| 30 | 25 | 1 | 74 | 17 | 0,29 | 0,06 | 424 |
| 60 | 23 | 1 | 76 | 32 | 0,08 | 0,06 | 420 |
| 180 | 25 | 1 | 74 | 18 | 0,59 | 0,18 | 410 |

Die angegebenen Mikrostrukturwerte stellen die auf 100 % umgerechneten Relativwerte dar. Die Absolutgehalte liegen bei ca. 80 %. JZ bedeutet die Jodzahl, gemessen nach DIN 53 241. Die Konjuengehalte sind die aus den UV-Absorptionen für $C_8H_{14}$, $C_8H_{12}$ und $C_8H_{10}$ berechneten. Auffallend ist der günstige hohe Anteil an konjugierten Triolefinen und Tetraolefinen.

Das Produkt nach der Isomerisierungszeit von 3 Stunden wurde in einer Naßfilmschichtstärke von 50 µ auf ein Blech gebracht und das Trocknungsverhalten in Anlehnung an DIN 53 150 geprüft. Dabei resultierten Staub- und Durchtrocknungszeiten <1 Stunde (Ausgangsprodukt: Staub- und Durchtrocknung: 9 Stunden).

Bei diesem Versuch wurde das Amid also in situ aus Lithiumbutyl (LiBu) und $H_2N\text{-}(CH_2)_3\text{-}NH\text{-}(CH_2)_3\text{-}NH_2$ gebildet.

Beispiel 2

200 g des in Beispiel 1 verwendeten Polybutadienöls wurden in einem ausgeheizten und mit Argon gespülten Rührkolben mit 29,1 g Bis-(3-aminopropyl)-ethylendiamin und 0,53 g

LiH bei Raumtemperatur versetzt, wobei sich eine Trübung bildete. Es wurde auf 150 °C erhitzt. Eine Verfärbung nach dunkelgrau trat auf. In einer exothermen, von starkem Aufschäumen begleiteten Reaktion stieg die Temperatur für kurze Zeit auf 170 °C. Dabei verfärbte sich der Kolbeninhalt nach blauschwarz. Wiederum wurde die Reaktion bei verschiedenen Zeiten untersucht, worüber Tabelle 2 Auskunft gibt.

Tabelle 2

Zeitabhängigkeit der Isomerisierung mit LiH/Bis-(3-aminopropyl)ethylendiamin (BAPED)

| t | Konjuengehalt (%) | | |
|---|---|---|---|
| (Min) | Diolef. | Triolef. | Tetraolef. |
| 30 | 11,8 | 2,2 | 1,1 |
| 60 | 13,7 | 2,8 | 1,1 |
| 180 | 12,1 | 2,4 | 0,93 |

Die Mikrostrukturen ändern sich nicht. Wiederum treten hohe Gehalte an konjugierten Mehrfacholefinen auf. Die Probenahme und -aufarbeitung erfolgte wie in Beispiel 1 beschrieben.

Bei diesem Versuch wurde das Amid in situ aus LiH und Bis-(3-aminopropyl)-ethylendiamin gebildet, wobei 0,5 Li/Kette und Amin : Li = 2,5 : 1 verwendet wurden, also wiederum das Amin im Überschuß vorlag.

Beispiel 3

100 g des in Beispiel 1 verwendeten Polybutadienöls wurden in der gleichen Weise wie dort mit 50 ml einer 10 %igen Aufschlämmung von Li-diisopropylamid (LiDiPA) in Hexan versetzt, was 0,5 Li/Kette entspricht. Dann wurde der Kolbeninhalt auf 120 °C gebracht, was von starkem Aufschäumen begleitet war. Nach 2,5 Stunden Reaktionszeit betrug der Gehalt an konjugierten Diolefinen 5,4 %.

Beispiele 4 und 5

Die Wirkung des in Beispiel 3 verwendeten LiDiPA kann durch Zugabe von die Löslichkeit erhöhenden Verbindungen wie Hexamethylphosphorsäuretriamid (HMPT) oder DPTA erheblich gesteigert werden. Mit jeweils der Hälfte des LiDiPA der in Beispiel 3 verwendeten Menge (≙ 0,25 Li/Kette) wurden bei Zusatz : Li-Verhältnissen von 2,5 : 1 Versuche bei 80 °C durchgeführt. Bei HMPT ergab sich nach 30 Minuten ein Gehalt an konjugierten Diolefinen von 9,5 %, der sich mit längerer Reaktionszeit bis zu 5 Stunden nicht änderte. Für DPTA als Zusatz wurden, ebenfalls bei 80 °C durchgeführt, 16,2 % konjugierte Diolefine, 0,85 % konjugierte Triolefine sowie 0,24 % konjugierte Tetraolefine nach 30 Minuten erhalten. Im weiteren Verlauf blieb der Diolefingehalt bis 5 Stunden konstant, während der Triolefingehalt auf 1,7 % und der Tetraolefingehalt auf 0,51 % anstiegen.

Beispiele 6 und 7

Die Arbeitsweise der vorangegangenen Beispiele wurde mit der Abwandlung wiederholt, daß Natriumamid in Verbindung mit Zusätzen wie HMPT (Beispiel 6) und DPTA (Beispiel 7) verwendet wurde. Dazu wurden 0,25 Mol $NaNH_2$/Kette und ein Zusatz : $NaNH_2$-Verhältnis von 2,5 : 1 eingesetzt. Bei 80 °C resultierten im Falle des Amins nach 3 Stunden 17,7 % konjugierte Di-, 0,76 % konjugierte Tri- sowie 0,21 % konjugierte Tetraolefine. Im Falle von HMPT ergaben sich 12,1 % konjugierte Diolefine. Damit ist gezeigt, daß bei ausreichender Löslichkeit der Amide isomerisierende Wirkung auch ohne daß mehrfache N-Funktionen vorhanden sind erreicht wird.

Vergleichsbeispiel A

In einem weiteren Versuch wurde als Vergleich zu dem bekannten Isomerisierungssystem LiBu/TMED* jetzt $NaNH_2$/TMED* eingesetzt. Nach 5 Stunden bei 80 °C unter analogen Bedigungen wie in den Beispielen 7 und 8 resultierten 0,45 % konjugierte Diolefine, womit aufgezeigt ist, daß dieser beschriebene Zusatz im Falle des leicht zugänglichen und preiswerten $NaNH_2$ unwirksam sind.

*TMED = Tetramethylethylendiamin

Beispiel 8

Die Arbeitsweise des Beispiels 7 wurde mit 0,5 NaH/Kette und dem Amin : NaH-Molverhältnis 2,5 : 1 wiederholt. Als Amin wurde BAPED bei 120 °C (10 Minuten) verwendet. Dabei resultierten 20 % konjugierte Diolefine. Nach 20 Minuten mußte der Versuch wegen zu heftigen Schäumens abgebrochen werden.

Beispiele 9 bis 11

Die Arbeitsweise von Beispiel 1 wurde mit geringeren Amin : Li-Verhältnissen wiederholt. Es ergaben sich die in Tabelle 3 aufgeführten Konjuengehalte.

Tabelle 3
Unterschiedliche Amin : Li-Verhältnisse bei 0,1 Li/Kette

| Nr. | DPTA:Li | t (h) | T (°C) | Konjuengehalte (%) Diolef. | Triolef. | Tetraolef. |
|---|---|---|---|---|---|---|
| 9 | 0,625 | 3 | 80 | 17 | 0,36 | 0,09 |
| 10 | 1,25 | 3 | 80 | 17 | 0,82 | 0,26 |
| 11 | 2,5 | 0,5 | 80 | 17 | 0,76 | 0,18 |

Beispiele 12 bis 15

Die Arbeitsweise des Beispiels 1 wurde bei 0,03 Li/Kette und unterschiedlichen DPTA : Li-Verhältnissen wiederholt. Es resultierten die in Tabelle 4 enthaltenen Konjuengehalte.

Tabelle 4

Unterschiedliche Amin : Li-Verhältnisse bei 0,03 Li/Kette

| Nr. | DPTA:Li | t (h) | T (°C) | Konjuengehalte (%) Diolef. | Triolef. | Tetraolef. |
|---|---|---|---|---|---|---|
| 12 | 0,625 | 5 | 80 | 3,8 | 0 | 0 |
| 13 | 1,25 | 3 | 80 | 2,4 | 0 | 0 |
| 14 | 2,5 | 1 | 80 | 16,0 | 0,22 | 0,05 |
| 15 | 5 | 1 | 80 | 17,0 | 0,27 | 0,05 |

Beispiele 16 bis 20

Die Arbeitsweise von Beispiel 1 wurde mit anderen Polymeren wiederholt. Dabei kamen ein vinylhaltiges Polybutadienöl (VPO), Polybutadienöle höheren Molekulargewichts (PO 130 und 160), Copolymeröle von Styrol und Butadien (Bu/St) sowie ein Polyisoprenöl (PIP) zum Einsatz. VPO wurde nach DE-OS 23 61 782 hergestellt, PO 130 und PO 160 sind Handelsprodukte der Chemischen Werke Hüls AG, das Copolymeröl wurde in Anlehnung an DE-PS 12 12 302 und das Polyisoprenöl durch anionische Polymerisation mit Li-Katalysatoren gewonnen. Die einzelnen Polymeren hatten folgende Kenndaten:

| Öltyp | $\overline{M}n$ | Mikrostruktur (%) trans-1,4 | 1,2 | cis-1,4 | Styrol |
|---|---|---|---|---|---|
| VPO | 930 | 12 | 42 | 46 | 0 |
| PO 130 | 3000 | 19 | 1 | 80 | 0 |
| PO 160 | 6000 | 8-16 | 2-4 | 80-90 | 0 |
| Bu/St | 960 | 12 | 5 | 54 | 29 |
| PIP | 1600 | 51 (3,4) | 3 (1,2) | 41 (1,4) | |

Die Konjuengehalte der Ausgangsprodukte waren <0,5 %. Es wurden bei der Isomerisierung die in Tabelle 5 aufgeführten Konjuengehalte erreicht.

Tabelle 5
Isomerisierung verschiedener Polymerer

| Nr. | Öltyp | T (°C) | t (h) | Konjuengehalt (%) |
|---|---|---|---|---|
| 16 | VPO | 120 | 3 | 12 |
| 17 | PO 130 | 80 | 2 | 17,8 |
| 18 | PO 160 | 80 | 3 | 8,6 |
| 19 | Bu/St | 120 | 3 | 7,4 |
| 20 | PIP | 120 | 3 | 5,7 |

Beispiel 21

Die Arbeitsweise von Beispiel 1 wurde in Cyclohexan als Lösungsmittel wiederholt. Dafür wurden 188 ml trockenes Cyclohexan mit 100 g des in Beispiel 1 verwendeten Polybutadienöls in einem ausgeheizten und mit Argon gespülten Rührkolben vorgelegt. Dazu wurden bei Raumtemperatur 3,4 ml der 2 m LiBu-Lösung in Hexan und 4,9 ml Dipropylentriamin gegeben. Anschließend wurde der Kolbeninhalt auf die Reaktionstemperatur von 80 °C gebracht. Nach 30 Minuten Reaktionszeit enthielt das Öl, das durch Abziehen des Lösungsmittels nach vorher mit 3 ml Methanol beendeter Reaktion gewonnen worden war, 18,9 % konjugierte Diolefine.

Beispiel 22

In üblicher Weise wurde Ethylmagnesiumbromid (EtMgBr) in Diethylether hergestellt. Dazu ließ man 2,74 g Magnesiumspäne im ausgeheizten und mit Argon gespülten Rührkolben, mit 12,26 g $C_2H_5Br$ in 50 ml trockenem Diethylether reagieren, worauf der Ether abgezogen wurde. Es wurden dann 300 g des in Beispiel 1 verwendeten Polybutadienöls und 29,4 g Bis-(3-aminopropyl)-ethylendiamin bei Raumtemperatur zugegeben und der Kolbeninhalt auf die Reaktionstemperatur von 150 °C gebracht. Das Öl nahm wiederum eine rotschwarze Farbe an. Nach 4 Stunden enthielt das nach der Zersetzung des Katalysators mit 4 ml Methanol von flüchtigen Bestandteilen befreite Produkt 14,5 % konjugierte Diolefine.

Beispiel 23

Es wurde als Isomerisierungskatalysator Alkalimetallstaub in Form von Natrium mit einem primären und sekundären Amin (BAPED) verwendet. Es wurden 0,5 Na/Kette und ein Amin : Na-Molverhältnis von 2,5 : 1 eingesetzt. Nach 20 Minuten bei 120 °C resultierte ein Konjuengehalt von 17,5 %.

Patentanspruch:

Verfahren zur Isomerisierung von isolierten zu konjugierten Doppelbindungen in Homo- und/oder Copolymeren von 1,3-Dienen unter Schutzgasatmosphäre mit Hilfe eines Isomerisierungskatalysators und gegebenenfalls in Gegenwart eines Lösemittels,
dadurch gekennzeichnet,
daß man als Isomerisierungskatalysator entweder

1 ein gegebenenfalls überschüssiges primäres und/oder sekundäres Amin enthaltendes Umsetzungsprodukt und/oder ein Gemisch aus
1.1 einem Alkalihydrid und
1.2 Ammoniak, einem primären oder sekundären Amin, oder

2 ein gegebenenfalls überschüssiges primäres und/oder sekundäres Amin enthaltendes Umsetzungsprodukt und/oder ein Gemisch aus
2.1 einer alkalimetallorganischen Verbindung und/oder einem fein verteilten Alkalimetall und
2.2 Ammoniak, einem primären oder sekundären Monoamin,
2.3 einem Amin der allgemeinen Formel I:

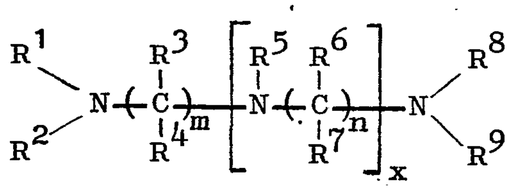

, in der die Reste $R^1$ bis $R^9$ ein Wasserstoffatom und/oder einen Alkylrest mit 1 bis 6 Kohlenstoffatomen sein können, wobei mindestens einer der Reste $R^1$, $R^2$, $R^5$, $R^8$ und $R^9$ ein Wasserstoffatom sein muß, m 3 bis 6 und n und x 1 bis 6 sein können, oder
2.4 einem Amin der allgemeinen Formel II:

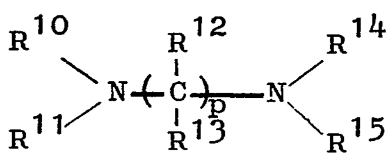

, in der die Reste $R^{10}$

0020925
O.Z. 3543

bis $R^{15}$ ein Wasserstoffatom und/oder einen Alkylrest mit 1 bis 6 Kohlenstoffatomen sein können, wobei mindestens einer der Reste $R^{10}$, $R^{11}$, $R^{14}$ und $R^{15}$ Wasserstoff sein muß, und p eine Zahl größer 3 ist, oder

3 ein gegebenenfalls überschüssiges Amin enthaltendes Umsetzungsprodukt und/oder ein Gemisch aus

3.1 einer magnesiumorganischen Verbindung und

3.2 einem Amin der allgemeinen Formeln I und II, in denen die Reste $R^1$ bis $R^{15}$ ein Wasserstoffatom und/oder ein Alkylrest mit 1 bis 6 Kohlenstoffatomen, m und p 2 bis 6 und n und x 1 bis 6 sein können, verwendet.

Europäisches Patentamt

**EUROPÄISCHER RECHERCHENBERICHT**

0020925

Nummer der Anmeldung

EP 80 10 2211

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 2 206 343 (NIPPON OIL)<br>* Anspruch 1; Seite 12, Vergleichsbeispiele 5,6 *<br>-- | 1 |
| XD | DE - A - 2 342 885 (NIPPON OIL)<br>* Anspruch 1; Seite 17, Vergleichsbeispiele 5,6 *<br>---- | 1 |

KLASSIFIKATION DER ANMELDUNG (Int.Cl. 3)

C 08 C 19/10

RECHERCHIERTE SACHGEBIETE (Int. Cl. 3)

C 08 C 19/10
19/26
19/00
C 07 C 5/25

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 08-08-1980 | V. HUMBEECK |